# EUROPÄISCHE PATENTANMELDUNG

(11) **EP 1 367 686 A2**
(43) Veröffentlichungstag der Anmeldung: **03.12.2003**
(21) Anmeldenummer: 02027237.3
(22) Anmeldetag: 06.12.2002
(51) Int. Cl.: H02J 7/00

(54) **Verfahren zur Pflege einer wiederaufladbaren Batterie**

(30) Priorität: 28.05.2002 DE 10223557
(71) Anmelder: Braun GmbH, 61476 Kronberg (DE)
(72) Erfinder: Franke, Michael, Dr., 64291 Darmstadt (DE)

(57) **Zusammenfassung**

Die Erfindung betrifft ein Verfahren zur Pflege einer wiederaufladbaren Batterie, bei dem nach Volladung oder Austausch der Batterie die Entladezeit gemessen wird, die vergeht, bis die Batteriespannung auf einen Spannungsschwellwert abgesunken ist. Die gemessene Entladezeit wird mit einem Referenzwert verglichen, und die Batterie vollständig entladen, wenn die gemessene Entladezeit kleiner als der Referenzwert ist.

Zusätzlich zur Entladezeit kann auch der während des Entladens fließende Strom gemessen und daraus die beim Entladen der Batterie entnommene Ladungsmenge ermittelt und mit einem Vergleichswert verglichen werden. Die Batterie wird vollständig entladen, wenn die Batteriespannung bereits auf den Spannungsschwellwert abgesunken ist, bevor die dem Vergleichswert entsprechende Ladungsmenge entnommen wurde.

## Beschreibung

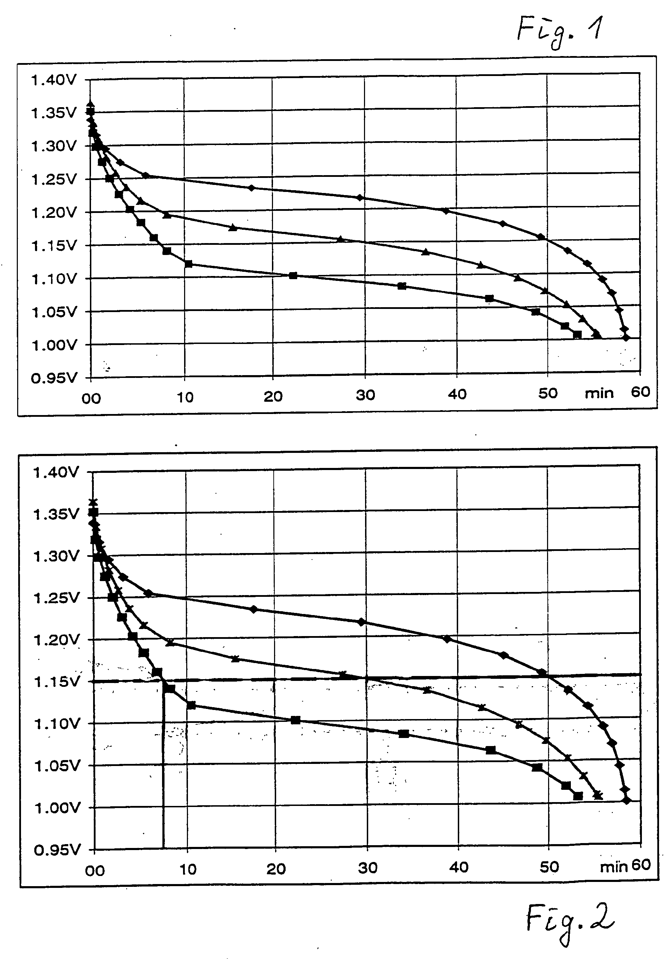

Die Erfindung betrifft ein Verfahren zur Pflege einer wiederaufladbaren Batterie, auch Sekundärbatterie oder Akku genannt. Durch die Pflege sollen die sonst durch Alterung und Memory-Effekt bedingten Änderungen der Batterieeigenschaften so weit wie möglich vermieden werden. Dies wird nachfolgend beispielhaft anhand von Fig. 1 erläutert, in der typische Entladekennlinien einer wiederaufladbaren Batterie dargestellt sind. Die oberste Kurve zeigt den zeitabhängigen Verlauf der Batteriespannung einer neuen Batterie, die ausgehend vom voll aufgeladenen Zustand (Spannung 1,35 V) über einen Zeitraum von 50 Minuten vollständig entladen wird (Spannung <1 V). Betreibt man die Batterie mehrere Jahre lang in einer Weise, bei der sie immer nur wenige Minuten entladen und danach wieder voll aufgeladen wird, so ergibt sich bei einer dann vorgenommenen vollständigen Entladung der Batterie die unterste in Fig. 1 dargestellte Kurve. Wird die Batterie daraufhin mehrmals voll aufgeladen und wieder vollständig entladen, so erhält man schließlich die mittlere in Fig. 1 dargestellte Kurve. Der Unterschied zwischen der obersten und der mittleren Kurve ist auf Alterung zurückzuführen, wogegen der Unterschied zwischen der untersten und der mittleren Kurve durch den Memory-Effekt bedingt ist.

Aus der DE 199 05 550 ist ein Verfahren zur Bestimmung bzw. Anzeige des Zustands einer Primär- oder Sekundärbatterie bekannt, in dem diese bis auf eine Mindestrestladung entladen ist. Dort wird nach vollständiger Aufladung der wiederaufladbaren Batterie die Entladezeit gemessen, die vergeht, bis die Batterie über einen angeschlossenen Verbraucher soweit entladen ist, daß die Batteriespannung bis auf einen ersten Spannungsschwellwert abgesunken ist. Dabei wird davon ausgegangen, daß der Verbraucher eine im zeitlichen Mittel im wesentlichen konstante Stromaufnahme besitzt. Nach Erreichen des ersten Spannungsschwellwerts wird dieser um einen von der gemessenen Entladezeit abhängigen Betrag erniedrigt. Wenn die Batterie über den Verbraucher weiter entladen wird, sodaß die Batteriespannung noch weiter absinkt, wird das Erreichen des erniedrigten Spannungsschwellwerts als Indikator für die Entladung der Batterie auf eine bestimmte Restladung, d.h. das Vorliegen eines sogenannten "low charge" Zustands der Batterie, angesehen.

Aus der DE 44 09 736 ist ein Verfahren und eine Vorrichtung zur Pflege eines in einem akkubetriebenen Gerät eingebauten Akkus bekannt, mit dem dem Memory-Effekt begegnet wird. Bei diesem bekannten Verfahren wird der Akku automatisch im Abstand von einigen Monaten zunächst vollständig entladen und und dann wieder vollständig aufgeladen. Diese Akkupflege wird nur dann durchgeführt, wenn das akkubetriebene Gerät über ein Ladegerät mit dem Netz verbunden ist, und daher das Wiederaufladen nach dem Entladen sichergestellt ist. Wird das Gerät wie oben beschrieben betrieben, d.h. der Akku immer nur wenige Minuten entladen und danach wieder voll aufgeladen, wäre eine Akkupflege in kürzeren Abständen wünschenswert. Andererseits kann auf eine Akkupflege ganz verzichtet werden, wenn der Akku beim Betrieb des Geräts immer erst vollständig entladen wird, bevor er wieder aufgeladen wird.

Es ist Aufgabe der vorliegenden Erfindung ein Verfahren anzugeben, das eine wiederaufladbare Batterie in einer ihrem jeweiligen Zustand angemessenen Weise zu pflegen gestattet.

Die Lösung dieser Aufgabe gelingt mit dem erfindungsgemäßen Verfahren zur Pflege einer wiederaufladbaren Batterie, bei dem nach Volladung oder Austausch der Batterie die Entladezeit gemessen wird, die vergeht, bis die Batteriespannung auf einen Spannungsschwellwert abgesunken ist, daß die gemessene Entladezeit mit einem Referenzwert verglichen wird, und daß die Batterie vollständig entladen wird, wenn die gemessene Entladezeit kleiner als der Referenzwert ist. Unter Entladezeit ist in der vorliegenden Anmeldung nicht die Zeit gemeint, während der die Batteriespannung nur durch Selbstentladung der Batterie abnimmt, sondern die Zeit, während der die Batterie über einen angeschlossenen Verbraucher, beispielsweise ein eingeschaltetes Gerät, entladen wird.

Bei einer vorteilhaften Variante des erfindungsgemäßen Verfahrens wird zusätzlich zur Entladezeit auch noch der während des Entladens fließende Strom gemessen und daraus die der Batterie entnommene Ladungsmenge ermittelt. Die ermittelte Ladungsmenge wird mit einem Vergleichswert verglichen, und die Batterie vollständig entladen, wenn die Batteriespannung bereits auf den Spannungsschwellwert abgesunken ist, bevor die dem Vergleichswert entsprechende Ladungsmenge der Batterie entnommen wurde.

Bei einer vorteilhaften Ausführung des erfindungsgemäßen Verfahrens wird zusätzlich auch die Zeit gemessen, die seit dem letztmaligen Absinken der Batteriespannung auf den Spannungsschwellwert verstrichen ist. Wird nämlich beispielsweise ein durch die Batterie betriebenes Gerät immer nur wenige Minuten benutzt, und danach die Batterie gleich wieder voll aufgeladen, wird die Batteriespannung über längere Zeit hinweg kaum bis auf den Spannungsschwellwert absinken. Entsprechendes gilt, wenn das Gerät über längere Zeit hinweg nicht oder nur wenig benutzt wird. Ist diese Zeit größer als eine bestimmte Maximalzeit, wird erfindungsgemäß die Batterie so weit entladen, daß die Batteriespannung bis auf den Spannungsschwellwert absinkt, dabei die seit Volladung oder Austausch verstrichene Entladezeit oder entnommene Ladungsmenge gemessen, der gemessene Wert mit dem Referenzwert bzw. Vergleichswert verglichen, und erforderlichenfalls die Batterie vollständig entladen. Liegt bei Überschreiten der Maximalzeit die Batteriespannung bereits unter dem Spannungsschwellwert, kann die Batterie vollständig entladen werden.

Beim erfindungsgemäßen Verfahren wird somit die wiederaufladbare Batterie nur dann vollständig entladen, wenn dies zur Erhaltung der vollen Lebensdauer der Batterie, d.h. zur Beseitigung des Memory-Effekts, auch tatsächlich nötig ist. Andererseits wird auf eine Batteriepflege ganz verzichtet, wenn die Batterie im Betrieb genügend oft so weit entladen wird, daß die Batteriespannung unter den Spannungsschwellwert absinkt, bevor sie wieder aufgeladen wird.

Ebenfalls vorteilhaft ist es, wenn zusätzlich auch noch die Zeit gemessen wird, die seit dem letztmaligen Aufladen oder Austausch der Batterie verstrichen ist. Ist diese Zeit größer als eine Minimalzeit, und ist währenddessen die Batteriespannung nur durch Selbstentladung bis auf den Spannungsschwellwert abgesunken, so wird eine Anzeige aktiviert, die die Alterung bzw. Notwendigkeit eines Austauschs der Batterie signalisiert.

Bei einer bevorzugten Ausgestaltung des erfindungsgemäßen Verfahrens wird nach dem Entladen die Batterie wieder aufgeladen. Zusätzlich kann direkt nach dem Wiederauf- laden noch einmal ein kompletter Batteriepflegezyklus bestehend aus vollständigem Entladen und nachfolgendem Wiederaufladen ablaufen. Wenn die dabei gemessene Entladezeit oder die entnommene Ladungsmenge erneut kleiner als der Referenzwert bzw. Vergleichswert ist, deutet dies auf eine gealterte Batterie hin, und es wird die Anzeige aktiviert, die die Notwendigkeit eines Austauschs der Batterie signalisiert.

Dieser zusätzliche Batteriepflegezyklus wird vorzugsweise durch automatisches Entladen der Batterie über einen Lastwiderstand und automatisches Wiederaufladen durchgeführt, wie nachfolgend erläutert wird, kann aber auch durch den Benutzer durch den normalen Betrieb des Geräts erfolgen.

Das erfindungsgemäße Verfahren kann bei batteriebetriebenen Geräten, beispielsweise einem elektrischen Rasierapparat oder einer elektrischen Zahnbürste Anwendung finden, die eine eingebaute Ladeschaltung aufweisen und beispielsweise über ein Netzkabel wieder aufgeladen werden können, oder die über ein separates Ladegerät verfügen. Es wird vorzugsweise selbsttätig durch eine elektronische Schaltung ausgeführt, beispielsweise einen Mikrokontroller, der ins Gerät eingebaut ist. Der Spannungsschwellwert, die Maximalzeit, die Minimalzeit und der Referenzwert bzw. Vergleichswert werden abhängig vom typischen Stromverbrauch des Geräts, der Kapazität der im Gerät verwendeten Batterie, der vom Gerät benötigten Mindestbetriebsspannung sowie ggfs. weiteren Parametern der Batterie und/oder der Temperatur festgelegt und im Mikrokontroller gespeichert. Bei dem in Fig. 2 dargestellten Beispiel beträgt der Spannungsschwellwert 1,15 V und der Referenzwert für die Entladungszeit 7,4 min. Um das erfindungsgemäße Verfahren durchführen zu können, d.h. die Batterie zwecks Pflege ohne Zutun eines Benutzers entladen zu können, muß das Gerät ferner eine Last aufweisen, beispielsweise einen Widerstand, sowie einen von der elektronischen Schaltung gesteuerten vorzugsweise elektronischen Schalter, über den die Batterie mit der Last verbunden und entladen werden kann.

Den aufgeladenen Zustand der Batterie erkennt der Mikrokontroiler beispielsweise durch Vergleich der aktuellen Batteriespannung mit der Nennspannung der Batterie, die ebenfalls im Mikrokontroller gespeichert ist. Ein Austausch der Batterie wird üblicherweise einen Reset des Mikrokontrollers hervorrufen, und kann daher ebenfalls leicht erkannt werden. Bei Geräten, bei denen der Mikrokontroller auch den Ladevorgang der Batterie steuert, wird der vollständig aufgeladene Zustand der Batterie vorzugsweise daran erkannt, daß eine (die) an sich bekannte(n) Bedingung(en) für das Beenden des Ladevorgangs erfüllt ist (sind).

Wenn ein batteriebetriebenes Gerät eine an sich bekannte Anzeige für den Ladezustand der wiederaufladbaren Batterie aufweist, kann der Benutzer nach dem automatischen Entladen der Batterie anhand der Ladezustandsanzeige selbst für das Wiederaufladen sorgen. Besonders vorteilhaft ist es aber, wenn die elektronische Schaltung mit einer Einrichtung versehen ist, die die Verbindung des Geräts mit einer externen Quelle elektrischer Energie, beispielsweise dem Netz oder einem betriebsbereiten Ladegerät, detektiert, über die die Batterie wieder aufgeladen werden kann. Wenn das Gerät mit der externen Energiequelle verbunden ist, wird die Batterie vorzugsweise automatisch wieder aufgeladen. Vorteilhaft ist es, wenn der Batterie überhaupt nur dann automatisch entladen wird, wenn eine Verbindung zu der externen Energiequelle besteht.

Zur Erhöhung der Genauigkeit des Verfahrens ist der Spannungsschwellwert temperaturkompensiert festgelegt, d.h. wird in Abhängigkeit von der Temperatur geändert.

## Patentansprüche

1. Verfahren zur Pflege einer wiederaufladbaren Batterie, bei dem nach Volladung oder Austausch der Batterie die Entladezeit gemessen wird, die vergeht, bis die Batteriespannung auf einen Spannungsschwellwert abgesunken ist,
**dadurch gekennzeichnet,**
**daß** die gemessene Entladezeit mit einem Referenzwert verglichen wird, und daß die Batterie vollständig entladen wird, wenn die gemessene Entladezeit kleiner als der Referenzwert ist.

2. Verfahren nach Anspruch 1,
**dadurch gekennzeichnet,**
**daß** zusätzlich zur Entladezeit auch der während des Entladens fließende Strom gemessen und daraus die beim Entladen der Batterie entnommene Ladungsmenge ermittelt und mit einem Vergleichswert verglichen wird, und daß die Batterie vollständig entladen wird, wenn die Batteriespannung bereits auf den Spannungsschwellwert abgesunken ist, bevor die dem Vergleichswert entsprechende Ladungsmenge entnommen wurde.

3. Verfahren nach Anspruch 1 oder 2,
**dadurch gekennzeichnet,**
**daß** zusätzlich die Zeit gemessen wird, die seit dem letztmaligen Absinken der Batteriespannung auf den Spannungsschwellwert verstrichen ist, und daß die Batterie so weit entladen wird, daß die Batteriespannung bis auf den Spannungsschwellwert absinkt, falls die verstrichene Zeit größer als eine Maximalzeit ist.

4. Verfahren nach Anspruch 1, 2 oder 3,
**dadurch gekennzeichnet,**
**daß** nach einem Entladen die Batterie wieder vollständig aufgeladen wird.

5. Verfahren nach Anspruch 4,
**dadurch gekennzeichnet,**
**daß** nach dem Aufladen erneut die Entladezeit oder die Ladungsmenge gemessen wird, die vergeht bzw. die entnommen wird, bis die Batteriespannung auf den Spannungsschwellwert abgesunken ist, und daß die gemessene Entladezeit oder die entnommene Ladungsmenge erneut mit dem Referenzwert bzw. Vergleichswert verglichen wird, und daß angezeigt wird, wenn die gemessene Entladezeit oder Ladungsmenge erneut kleiner als der Referenzwert bzw. Vergleichswert ist.

6. Verfahren nach einem der vorhergehenden Ansprüche,
**dadurch gekennzeichnet,**
**daß** zusätzlich auch noch die Zeit gemessen wird, die seit dem letztmaligen Aufladen oder Austausch der Batterie verstrichen ist, daß die gemessene Zeit mit einer Minimalzeit verglichen wird, und daß eine Anzeige aktiviert wird, die die Alterung bzw. Notwendigkeit eines Austauschs der Batterie signalisiert, wenn diese Zeit größer als die Minimalzeit ist, und während dieser Zeit die Batteriespannung nur durch Selbstentladung bis auf den Spannungsschwellwert abgesunken ist.

7. Verfahren nach einem der vorhergehenden Ansprüche,
**dadurch gekennzeichnet,**
**daß** der Spannungsschwellwert in Abhängigkeit von der Temperatur geändert wird.

8. Gerät mit einer wiederaufladbaren Batterie und einer elektronischen Schaltung zur Durchführung des Verfahrens nach einem der vorhergehenden Ansprüche,
**dadurch gekennzeichnet,**
**daß** die elektronische Schaltung mit einer Einrichtung versehen ist, die die Verbindung des Geräts mit einer externen Quelle elektrischer Energie, beispielsweise dem Netz oder einem betriebsbereiten Ladegerät, detektiert, und daß die elektronische Schaltung die Batterie nur dann über eine Last entlädt, wenn das Gerät mit der externen Energiequelle verbunden ist.

9. Gerät nach Anspruch 8,
**dadurch gekennzeichnet,**
**daß** die elektronische Schaltung geeignet ist, die Batteriespannung mit einem Spannungsschwellwert zu vergleichen, die Zeit zu messen, die seit dem letztmaligen Absinken der Batteriespannung auf den Spannungsschwellwert oder seit dem letztmaligen Aufladen oder Austausch der Batterie verstrichen ist, das Aufladen der Batterie zu steuern, und/oder das Entladen der Batterie zu steuern.
